Europäisches Patentamt

European Patent Office

Office européen des brevets

(11) Publication number: **0 238 727 B1**

# EUROPEAN PATENT SPECIFICATION

(45) Date of publication of patent specification: **09.10.91** (51) Int. Cl.⁵: **G11B 5/60**

(21) Application number: **86118078.4**

(22) Date of filing: **24.12.86**

(54) Magnetic head-slider and method of fabricating the same.

(30) Priority: **30.12.85 US 814931**
**30.12.85 US 814824**

(43) Date of publication of application:
**30.09.87 Bulletin 87/40**

(45) Publication of the grant of the patent:
**09.10.91 Bulletin 91/41**

(84) Designated Contracting States:
**AT BE CH DE FR GB LI LU NL SE**

(56) References cited:
**EP-A- 0 015 383**
**EP-A- 0 198 619**
**US-A- 4 191 980**

(73) Proprietor: **UNISYS CORPORATION**
**Township Line and Union Meeting Roads**
**Blue Bell Pennsylvania 19424(US)**

(72) Inventor: **Verdone, Michael A.**
**20 Shady Lane**
**Hillsborough, CA 94010(US)**

(74) Representative: **Eisenführ, Speiser & Strasse**
**Martinistrasse 24**
**W-2800 Bremen 1(DE)**

## Description

The present invention relates to air bearing slider assemblies used for noncontact recording in magnetic disk files and the like.

Prior Art, Invention Features:

Magnetic head assemblies, comprising sliders carrying magnetic transducers, are widely and extensively used in magnetic recording apparatus, particularly disk recording apparatus. Various types of head/slider arrangements that fly on a fluid or air bearing film over the moving recording media surface are well known in the art. In order to maximize the density of stored data on such magnetic disks, the flying height of the transducer above the media is made as small as is practical, with the requirement that a substantially constant height be maintained. Conventionally, the sliders are designed such that they experience, from their support arms, a constant pressure toward the disk surface, with the lifting force of the air bearing serving to hold the slider and transducer away from the disk surface the desired amount when the disk is rotating.

Magnetic head assemblies that fly relative to magnetic media have been used extensively. The objectives for improving the noncontact transducing relationship between a magnetic transducer and a magnetic recording medium, such as a rotary disk, are to attain very close spacing between the transducer and the disk, and to maintain a stable constant spacing. The close spacing, when used with very narrow transducing gaps and very thin magnetic record films, allows short wavelength, high frequency signals to be recorded, thereby affording high density, high storage capacity recording. As the data recording technology progresses, it becomes more desirable to fly magnetic heads more closely to the magnetic disk surface in order to increase data packing density.

Workers are aware of prior art techniques to utilize magnetic head-slider assemblies. In such an air bearing slider assembly, magnetic transducers are affixed thereto for non-contact recording on a passing magnetic disk. Workers know how to mount such magnetic head assemblies (having air bearing sliders) onto carriages -- e.g., to be used in integrated data modules for storage of information in a magnetic disk file.

Efforts now abound to increase the density of storage on such magnetic disks -- e.g., workers are trying to narrow disk-track width.

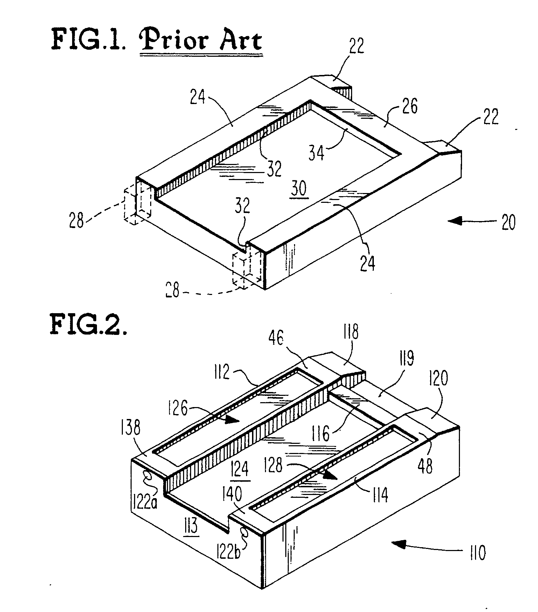

Illustrated in FIG. 1 is a prior art "self-loading" slider 20' of the conventional, taper-flat configuration with ramps 22' leading into air bearing support side rails 24' which run the length of the slider. At the leading edge of the slider a cross rail 26' (emphasizes negative pressure and self-loading of cavity 30') extends between the two side rails 24'. Suitable magnetic transducers 28', schematically illustrated in phantom, are provided at the trailing edge of the transducer.

In this prior art slider 20' the flying height is controlled by the provision of a rectangular negative-pressure cavity 30' bounded on three sides by the side rails 24' and the cross rail 26'. This cavity 30' is generally formed by various etching techniques, is disadvantageous in that the manufacturing processes form side walls 32' and 34' between the base of the cavity 30' and the side rails 24' and transverse rail 26', which side walls are generally perpendicular to the surfaces of the side rail and transverse rail. The abrupt break between the fluid bearing support surfaces and the side walls, as well as the corners at the leading edge of the recess 30' have tended to trap dust and debris and to make continued control of the flying height difficult. As noted above, the necessity for forming such a structure by etching has also limited the materials from which the slider could be fabricated and has complicated the manufacturing process.

FIG. 2 shows a further prior art air bearing head slider formed from a substantially rectangular block 110 made of ceramic, by way of example. The slider may be configured with an air bearing surface that is flat, taper-flat, or other variations of geometry. The slider configuration has two spaced side rails 112 and 114 and a cross-rail 16. The leading portion of each rail 112 or 114, relative to a moving data track, is formed as tapered sections 118 and 120 respectively. Between the tapered sections and at the leading end of the slider adjacent to the cross rail 116, a recessed step 119 is configured.

Magnetic transducer elements 122a, 122b, which may be thin film assemblies, are bonded to the ends of the rails 112 and 114 at the trailing end 113 of the slider relative to the path of movement of the data tracks as found for example on a rotating magnetic disk (not shown). The transducing gaps of the elements 122a,b are flush with the surface of the side rails 112 and 114. The slider assembly, when it is urged by a load means toward the surface of a rotating magnetic disk, establishes a thin air lubricating film which separates the gaps of the transducer elements from the disk by a very small, but constant distance.

A negative pressure zone 124 is formed by the configuration of the side rails and cross-rail. The negative pressure zone is made in the recessed region following the cross-rail 116 and between the two side rails 112 and 114 to the same depth as the step 119, which may be in the order of 10 microns.

To provide optimum opposing load forces, and to realize mechanical stability with insensitivity to skew and disk curvature or flutter while preserving high stiffness, reliefs or recessed areas 126 and 128 may be formed on the exposed surfaces of the side rails and at the air bearing surface of the slider. The recesses 126 and 128 are formed, by etching for example, to a depth in the side rails which produces a condition of essentially ambient or slightly subambient pressure across the side rails in the recess areas 126, 128 during flying operation of the head slider. The recesses 126, 128 are preferably formed to a depth in the range of 0.5 to 3 microns. The cross-rail 116 may also be relieved to the same depth as the recesses below the surface of the side rails, during the same fabrication step.

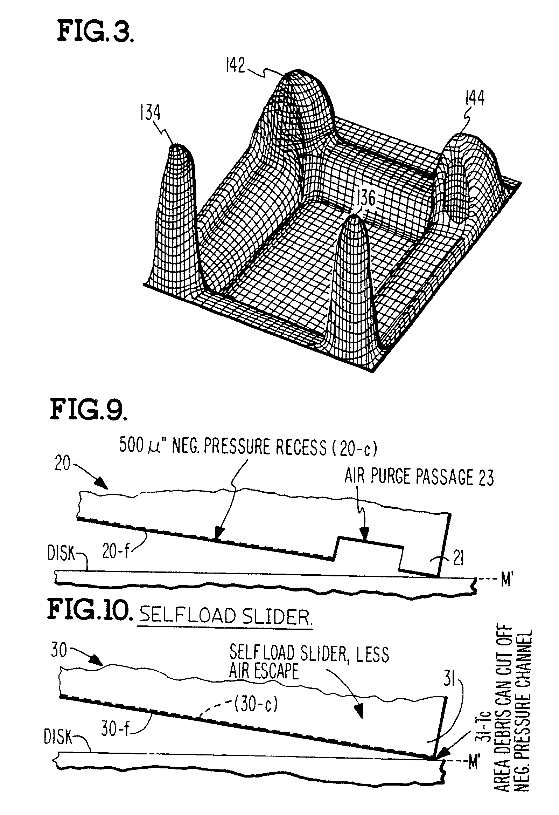

FIG. 3 depicts a trailing edge isometric view of the pressure profile observed with the implementation of the inventive slider described with reference to FIG. 2. For reference, the outer slider boundaries are at ambient pressure. The zones between the pressure peaks (136 and 144, and 134 and 142) have average pressures essentially equal to ambient, and relate to the side rail relieved zones 126 and 128 respectively. The two projecting positive pressure areas 134 and 136 relate generally to the trailing end surfaces 138 and 140 of the side rails 112 and 114, respectively, and the positive pressure areas 142 and 144 relate to the front portions 146 and 148 respectively of the side rails. This illustrates "4-point" slider-record contact.

Such a slider as above described according to Fig. 2 is already known from EP-A1-0 015 383.

This citation also discloses a slider which differs from the slider as shown in Fig. 2 in that the side rails are formed as trapezoidal type sections with its width increasing continuously from a minimum at the leading edge to a maximum at the trailing edge. Thus, the width of the recess region forming the negative pressure zone between the two side rails decreases continuously from a maximum at the leading edge to a minimum at the trailing edge. In the same manner as the slider according to Fig. 2, this slider is also formed from a substantially rectangular block.

Further various types of known slider configurations are known from US-A-3 855 625, 4 081 846, 3 823 416 and 3 754 104.

However, the structure of the prior art sliders have several major disadvantages both in fabrication and in operation. In particular, the manufacturing costs are rather high. A further disadvantage of the prior art sliders resides in the fact that controlling of the reduced pressure generated by the air bearing surface and the flying height of the slider above the moving recording media surface is rather difficult.

A delta-shaped slider is known from EP-A2-0 198 619 which is to be considered with regard to novelty under Art. 54 (3), (4) for the contracting states (DE, FR, GB and IT). This slider does not have a cavity formed in the fluid support surface.

Therefore, it is an object of this invention to provide a novel slider for flying a magnetic head at a substantially constant spacing from the moving magnetic media during operation which slider overcomes the above disadvantages of the prior art sliders.

It is another object of this invention to provide a slider which resists roll.

A further object is to provide such a slider which is easy and economical to manufacture.

To achieve the foregoing as well as other objects which will appear below, the present invention provides a slider for flying a magnetic head on a fluid bearing relative to magnetic recording media moving in a predetermined direction in the fluid, comprising

a slider body having leading and trailing edges for flying above the moving media;

a generally cuneiform planar fluid support surface extending generally transverse to the predetermined direction of movement of said media, the area of this surface increasing continously from a minimum at the leading edge to a maximum at the trailing edge; and

a cavity formed in said fluid support surface, whereby the cavity may serve to create a controlled reduced-pressure area on the fluid bearing surface when the slider is flying above the moving media to urge the slider closer to the media;

characterized in that

said slider body, in its bottom view, is delta shaped and comprises said generally cuneiform planar fluid support surface as a wedge-shaped fluid bearing surface; and

said cavity is spaced from said leading edge and being positioned adjacent said slider trailing edge and has an opening at its trailing end, whereby fluid within the cavity may be exhausted through said opening.

The inventive slider is a "delta slider" in which an air bearing surface ABS includes a generally planar, but divergent, fluid support surface extending generally transverse to the direction MM of media movement, with ABS area increasing in direction MM. The leading edge of this ABS is relatively narrow and pointed. The cavity opening to the trailing edge of the slider serves to create a reduced or negative pressure area of predetermined characteristics, to maintain the flying height of a predeterminded desired level.

Furthermore, the present invention provides a method of fabricating delta shaped sliders according to the invention, the method including:

providing a rectangular bar of slider material, this bar including a pair of elongate planar parallel top and bottom faces defined between opposing parallel sides;

forming a row of identical relatively adjacent triangular slider pieces, including forming air bearing surfaces and associated cavities and other elements in common, the sliders being disposed in alternating reversed juxtaposition along the row; and

servering the sliders so formed from the bar.

The present invention provides for a simple and straight forward manufacturing process and the formation thereby of a slider whose flying characteristics may be easily and carefully controlled during manufacture.

BRIEF DESCRIPTION OF THE DRAWINGS:

The present invention will be better understood by reference to the following detailed description of the present preferred embodiments which should be considered in conjunction with the accompanying drawings (not necessarily to scale), wherein like reference symbols denote like elements.

FIG. 1 depicts, in schematic perspective, a prior art self-loading ("modified Winchester") type slider while FIG. 2 similarly depicts a like known slider whose ABS pressure profile is given in FIG. 3;

FIG. 4 depicts in plan view a like self-loading slider, shown in side and end views respectively in FIGS. 5, 6, with different pressure profiles thereof given in FIGS. 7 and 8, these being idealized pressure-profiles along respective axes of this slider;

FIG. 9 schematically indicates operational attitude (side view) of such an embodiment, while FIG. 10 indicates the same without a back-bar;

FIG. 11 shows a delta slider;

FIG. 12A shows a bottom view and

FIG.12B shows a side view of this delta slider;

FIG. 13A shows a similar bottom view and

FIG. 13B shows the transducer means mounted on the tail of the delta slider;

FIG. 14A and B indicate pressure profiles for slider air bearing;

FIG. 15 is a photograph taken of a delta slider flying above a glass disc;

FIG. 16 depictes the relation between the plane of leading pad and the plane of trailing pad;

FIG. 17 to 19 show the treatment steps on a single multi-slider workpiece;

FIG. 20 is a bottom view of another embodiment of a delta shaped slider; and

FIG. 21 a similar view of a delta slider.

Description of Back-bar; feature:

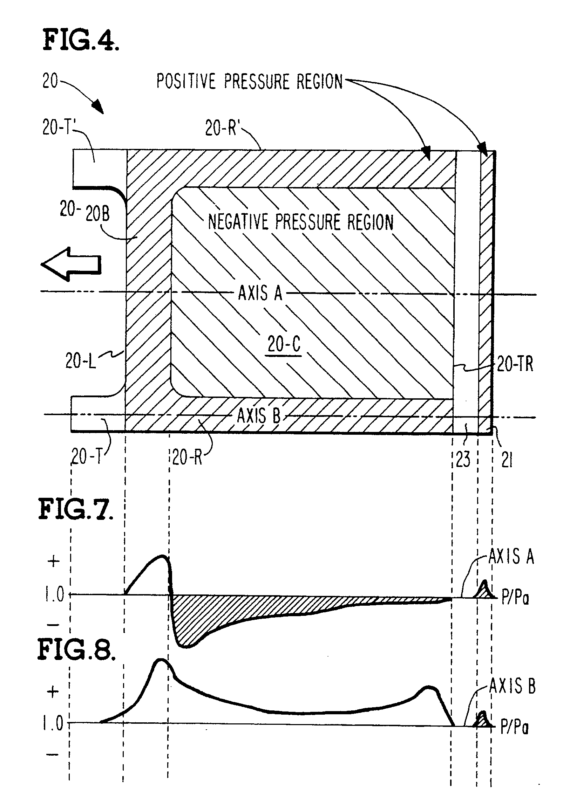

FIGS. 4-6 schematically illustrate a "self-loading" type slider assembly 20 constructed and modified according to a back-bar feature.

More particularly, FIGS. 4-6 will be understood as schematically depicting such a slider 20 which is improved to include a prescribed "full back bar" 21 and associated "purge channel" 23 extending transverse to the direction of slider flight (arrow). Slider 20 will be recognized by workers as otherwise conventional, comprising a ceramic body 1 with a leading edge portion 20-L and a trailing edge portion 20-TR, a pair of (positive-pressure) side-rails 20-R, 20-R' (including projecting, ramped lead-tips 20-T, 20-T'), plus a very shallow interior aerodynamic cavity 20-C (or "negative-pressure channel") of prescribed precise dimensions (usually, up to several μm).

It has been found that advantageous effects may be produced by a prescribed extension of the slider length to accommodate a "back-bar" 21 and intervening "purge channel" 23 of proper dimensions, designed to reduce the pressure to zero (atmosphere) -- and yield such effects as flushing the dirt particles away from the transducer end. Workers know that one must guard against detritus clogging slots P, R or cavity L (e.g., this can lead to a catastrophic head crash). Now, some detritus build-up is virtually certain with such sliders. For instance, the best filters ["99.999%" type] correctly used with such equipment will customarily exclude all atmospheric contaminants larger than about 0,3 μm. This should eliminate most smoke particles (usually ~ 6,35μm). But smaller airborne contaminants abound and can readily build-up in shallow cavity L (especially at its trailing edge) and/or in slots P, R [e.g., commonly: oil vapor from the disk drive bearings, particles from the media -- also smog, atmospheric dust and fumes, rosin smoke, metallurgical dust and fumes, viruses, etc.]. Thus, the art needs a better contaminant-free slider which avoids, or mitigates, such problems. This is one salient objective of my invention.

Thus, as one feature hereof, an improved, more contaminant-free flying slider is provided with a "back-bar" and associated transverse flush-cavity (purge channel) adapted to better accommodate multiple heads at the lowest point of slider's flying face (above disk), to reduce pitch angle, to better "flush" the slider (cf. more reliable way of keeping "negative-pressure-orifice" clean), to facilitate fabrication of thin film heads (lower cost, yet high reliability due to accuracy of masking techniques), and to effect improved "purging" (at the R/W gap).

In particular, this allows multiple transducer means to be located anywhere across the "back bar" (compared with conventional sliders). This "back bar" extends the full width of the slider (trailing edge) --i.e., to be a "full back bar" (no advantage to less than full width) -- and it may be of any suitable width (along direction of axis A) depending on pitch angle required (e.g., here, several mils width was found suitable).

The "purge channel" 23 is cut just upstream (forward) of the back-bar 21 along the slider ABS face 20-f. Channel 23 will be located (along axis A) such as to terminate cavity and to distribute positive and negative (dynamic) forces as understood by workers. Channel 23 may in some instances be cut in two segments. Channel 23 is preferably cross-sectionally rectangular (square-corners as in FIG. 5, e.g., for fabrication convenience) or virtually any other suitable shape.

For instance, satisfactory operation has been observed with a self-loading slider like slider 20 (FIGS. 4-6) about 4,32 mm in length L ($L_c$ = 2,36 mm) by 1,02 mm in height h ($h_c$ = 0,64 mm), by 2,79 mm in width w ($w_c$ = 2,03 mm); with rails having a width $w_r$ of about 0,38 mm [ramp $h_p$ about 4,44 $\mu$m in height $h_r$;

tips 20-T about 0,51 mm in length, $t_e$ -- bar 20-L about 20 mils in length, $f_e$] with inner "flying-cavity" 20-c about 12,7 $\mu$m in depth $d_c$ and 2,03 mm in width $w_c$.

For this slider, under relatively conventional "flying" conditions (e.g., disk surface-velocity at mid-track about 38,1 m/sec -- 3600 rpm 10,16-17,76 cm disk band), it is found satisfactory to make "back bar" 21 about 5 mils wide ($w_b$) and "square" in cross-section (cf. FIG. 5) with a purge channel 23 about 10 mils wide ($w_p$) and about 4 mils deep ($d_p$) and "square-cut". This afforded a stable flying height of about 0,13 - 0,18 $\mu$m (at trailing edge, along back-bar), and showed fine "self-flushing" characteristics.

--Operation of this Embodiment (see FIGS. 7, 8):

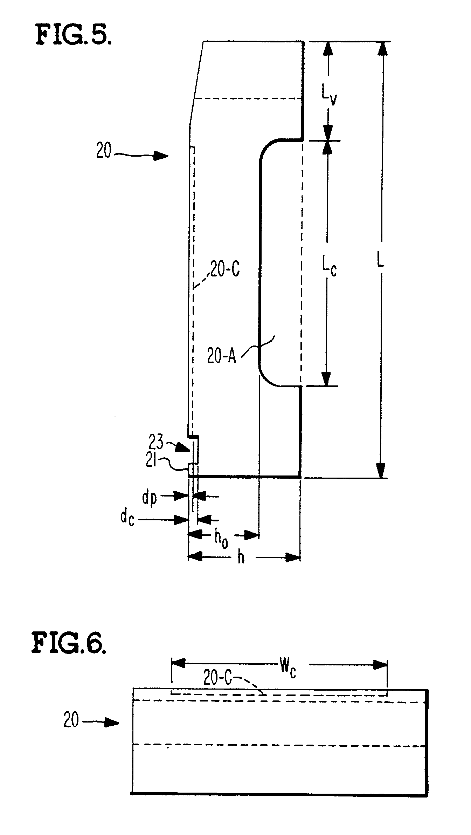

FIG. 9 diagrammatically suggests how such a slider 20 is intended to function, as opposed to a like slider 30 lacking the "back-bar" and "purge channel" (both sliders assumed to be flying above a disk at a desired attitude, for read/write operations). The trailing corner 31-Tc of conventional (self-load) slider 30 in FIG. 10 will be visualized as allowing relatively little air (compressed by slider flight) to escape, and will be seen as approaching so close ("trailing corner" 31-Tc of flying-face 30-f at trailing-edge 31) to the passing disk surface (see plane M'---M') as to readily be occluded by debris build-up -- such as to "block" the desired, necessary purge of its "negative-pressure-channel" 30-c.

By comparison, when analogous embodiment 20 is provided with a back-bar 21 and associated purge channel 23 (see FIG. 9) to purge its "negative-pressure-channel" 20-c of debris, air can readily and quickly escape to atmosphere, so the slider 20 may purge itself of debris quite easily. [Note the relatively "massive" dimensions of purge-channel 23 compared with the miniscule depth of n-p channel 20-c]. Such "purging" along such a relatively massive channel (cut transverse to the flying direction) is found different from (and superior to) other proposed air escape configurations such as "parallel slots" through bar 20-B. This proposed design is not as practical or economical, etc., as I would like.

Thus, this "full back-bar/transverse purge channel" design improves operational and other characteristics of the usual "self-load" slider, giving a massive air purge conduit across to the air bearing surface (to very effectively flush cavity 20-c) and parallel to the back-bar. The "positive pressure" and the "negative pressure" regions provide the "net load" across the air bearing surface (compare FIGS. 7, 8 with FIG. 4). The positive pressure surfaces (along axis B; cf. FIG. 8) fully flank the medial negative pressure area (e.g., along axis A; cf. FIG. 7). The resultant (net, loading) force due to these pressures provides a relatively constant load over the slider bearing. Changes in air flow or disk speed will have negligible effect on this loading; hence, a more stable air bearing surface is realized.

The positive loads due to positive pressure distribution along the side rails and the "back-bar" control the "bearing stiffness" of the slider. The sum of these positive loads tends to increase the "net load", resulting in a higher air-bearing-stiffness (see FIGS. 7, 8 for pressure profiles plotted along axis A, axis B of slider of FIG. 4).

Workers will note that as cavity depth (cd) increases the flying height (fh) increases and becomes less linear vs load change -- and tends to approach the characteristics of a more conventional slider OW (ordinary Winchester, no Back-Bar), suction decreases as cd increases. Thus, a worker would likely prefer a MIN cd design (e.g., 2,54 $\mu$m ); however, for ease and reliability of rendering such miniscule "cd cuts", we prefer a cd of about 7,62 $\mu$m (or slightly more).

The positive pressure distributed along the back-bar surface will increase slider stiffness. This added stiffness will tend to improve control of the slider and inhibit undesirable "roll" (e.g., about axis A, FIG. 4). The presence of such positive back-bar pressure also acts to reduce the "pitch restoring moment", and thus reduce "pitch angle" where pitch angle is plotted vs load for a "zero load full back bar" slider.

Workers will be surprised to note that, unlike the ordinary slider, such "back bar sliders" are so relatively insensitive to changes in load (especially the smaller cd, at least for such minor load changes). A like (surprisingly) insensitivity to disk-velocity is also observed (e.g., 38,1 - 63,5 m/sec).

Initial Delta Embodiment

FIG. 11 indicates some broad features of the subject "delta slider" here shown rather generally as delta slider SL depicted in pitched "flying condition" flying on an air bearing film past associated magnetic recording medium M. Slider SL will be understood as pitched-up by positive hydrodynamic forces on forward pad PD (situated just aft of ramp R) and supported elsewhere by the positive forces on tail section TL as well as some forces from the rail members 1-RL enclosing cavity CV -- cavity CV acting as a negative pressure force as with the typical self-floating slider urging slider SL relatively toward passing medium M. A "Delta slider" will be understood as having a somewhat pointed (reduced width) nose with gradually increasing ABS area going aft therefrom. (The non-ABS parts of the slider need not follow this Delta-profile, though such is preferred).

TABLE A

As further detailed below, many desired characteristics inhere in this "delta slider", such as:

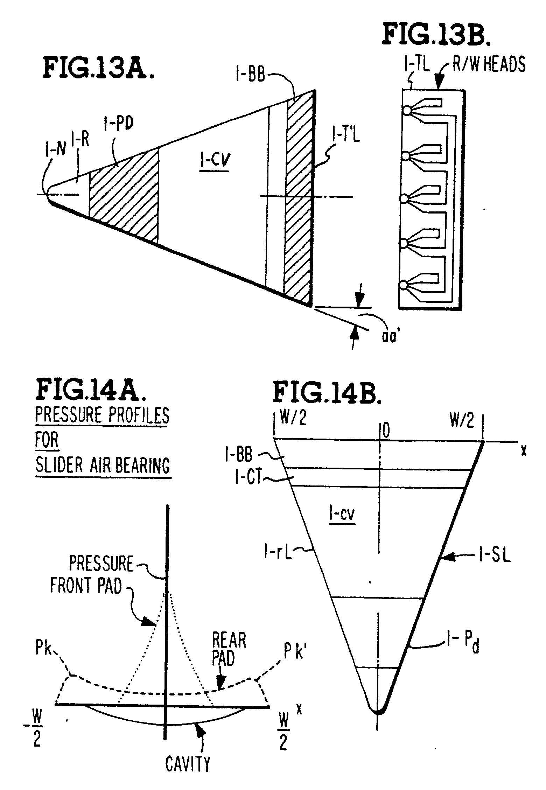

1. It provides a slider with a "three point force profile" and greater stability (less roll, etc; see discussion of FIG. 13 below).
2. The delta shape provides a maximum tail area for mounting read/write heads (as much as with the best conventional sliders), whereas the overall slider mass (weight) is radically reduced (about one-half of a conventional slider such as in FIG. 1 or in US-A-3,855,625, etc.).
3. This great reduction in mass is accompanied by a significant decrease in production cost and an increase in the "natural frequency" of the slider --this latter acting to increase the servo band width associated with the head carriage (e.g., when mounted on the same load beam as slider of US-A-3,855,625, the delta has a natural frequency 5% higher).
4. The delta design is particularly stable, especially laterally and is quite resistant to disturbance from surface asperities, being nimble in negotiating such, without problems.
5. Delta operation is particularly clean, even "self-cleaning", since its "plow-shaped nose" is adapted to thrust particles (dirt, etc.) to one side.

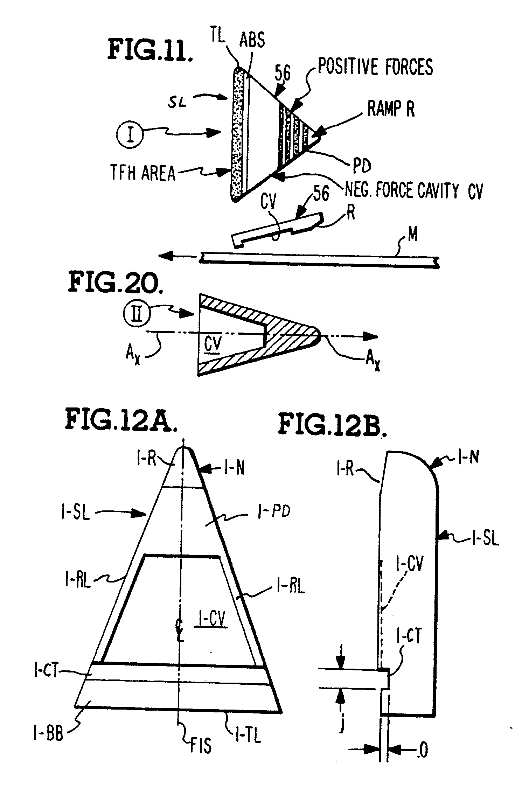

A particularly preferred version of such a delta slider is shown in FIG. 12A in bottom view as delta slider 1-SL, in associated side view in FIG. 12B and in similar plan view in FIG. 13A with a schematic end view in FIG. 13B showing the transducer means mounted on the tail.

Thus, slider 1-SL has a ramp means 1-R across its forward air bearing surface ("ABS"), terminating in a somewhat nose portion 1-N which is somewhat pointed as illustrated (the ramp section being relatively conventional as known by workers, both in structure and in function). A positive pressure pad ABS 1-PD is provided just aft of ramp 1-R. A negative pressure cavity 1-CV is disposed aft of pad 1-PD, and is defined laterally by a pair of thin rail means 1-RL.

A back bar arrangement preferably terminates this structure with a back bar slot 1-CT just aft of cavity 1-CV (and adapted to "purge" 1-CV), with the other side of slot 1-CT defined by a back bar member ABS 1-PB presenting a tail edge 1-TL on which transducer means are mounted (e.g., about five as shown schematically in FIG. 13B). Of course, features like the Back-bar/slot, ramp, etc. are not always necessary for a Delta slider, as workers will perceive.

The slider material may be made of any known "slider material" as known in the art; for instance, a ceramic which, as finished, in the illustrated form may be the order of 3,81 to 4,06 mm long by about 3,048 to 3,3 mm wide at tail 1-TL and about 0,86 mm high with cavity 1-CV for instance being 8,89 to 10,16 $\mu$m deep and slot 1-CT being the order of 0,1 mm deep by about 0,254 mm wide. Rail walls 1-RL will be kept thin (e.g., about 0,127 mm). The angle of divergence of the sides (see angle aa', FIG. 13A) may be the order of 20 to 22°.

--Results:

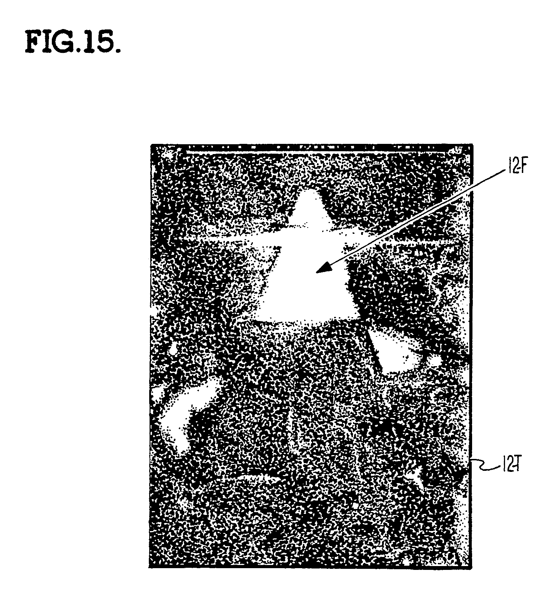

Workers will be surprised at how clean, nimble, stable and effective a slider such as 1-SL can be in operation. For instance, FIG. 15 is a photograph taken of such a delta slider flying above a glass disk (photographed from under the disk) with the forward area 12-A flying at about 0,36 $\mu$m and the tail area at 12-T flying at about 0,05 $\mu$m in very stable condition.

One reason for the great stability and particularly strong resistance to roll is presented in the analysis summarized by FIG. 14A, a plotting of ideal pressure profiles for a slider air bearing like 1-SL, illustrated in associated FIG. 14B. Here, it will be understood that the positive pressure thrusting the slider away from the medium is principally exerted by the "front pad" 1-PD and to a lesser degree by the aft ABS, or "rear pad" (including back bar 1-BB and rails 1-RL flanking cavity 1-CV). This "rear pad" ABS pressure profile will be seen as presenting minor peaks $P_K$, $P_K'$ determined principally by the additive function of rails 1-RL. These positive pressures will be understood as resisted by the oppositely urging negative pressures of cavity 1-CV (see "cavity" in the profile plot).

TABLE B

Some features of this delta slider (ABS) appear to be:

1. CLEAN: A triangular or "Delta" shape (in plan-cross-section) together with a properly pitched flying attitude (leading edge flies at greater height than trailing edge above media) appears to give this design a particular self-cleaning aspect. Any dirt particles encountered (at head-disk interface) will likely be deflected to either side of the slider.

2. STABLE: The slider is supported as it flies on the medium by three main pressure points (see discussion re FIG. 11A above) with consequent great improvement in slider stability, especially in the lateral direction (vs. roll).

Thus, as opposed to a conventional "rectangular profile" slider (as slider 20 in FIG. 1), there is virtual complete elimination of "wobble" tendencies (i.e., a lateral "seeking" of a plane of stabilization while flying, with associated oscillation back and forth in the roll direction, e.g., when one rail ABS 1-RL is not exactly coplanar with the other). Radical reduction of rail ABS area helps to provide this stability too.

2A. SELF-RIGHTING: Pitch attitude of such a delta slider should be largely determined by the pressure differential under the leading pad ABS (1-PD) vs. that of the trailing edge ABS (1-TL) -- the size of the leading pad 1-PD is probably a significant factor determining the air bearing pressure attained (here a pitch of about 80 to 90 micro-radians is assumed).

As long as the air bearing surface adjacent the trailing edge is sufficiently flat, the pressure peaks near the edges of the slider should be relatively equal (see FIG. 12, peaks $P_K$, $P_{K'}$); this balance of forces will tend to keep the plane of the air bearing surfaces ABS parallel to the plane of the passing disk.

Further, the fact that the forward pad 1-PD has a reduced-length lateral "lever arm" significantly reduces roll tendencies. The pressure peak on this leading pad will be centered on the slider's center line. If the plane of leading pad 1-PD is different than the plane of the trailing pad, then leading pad 1-PD will tend to exert a roll force on the slider. This is indicated schematically in FIG. 3 where the large force $F_1$ on the leading pad is directed symmetrically on the pad, that is on the center line of the slider. Since there is only one force applied to this pad, there is very little (other than the spatial extent of the force) to affect the orientation of the pad with respect to the disk. The trailing pad, however, has a relatively uniform support along the entire slider width; and this tends to keep its ABS parallel to the disk surface. Since the moment arm of the leading pad tending to roll the slider is so small, the overall roll forces will always be much reduced and relatively trivial and the slider will typically tend to return to its "no-roll" equilibrium state even when perturbed (a "self-righting" characteristic).

2B. EDGE-FORCES BALANCED: Workers will understand that as this Delta ABS rushes across a disk (or other flat) surface, very very close thereto, a type of "exhaust" is commonly thrown-up about its sides from air escaping the entrapment induced by "wedging" between the up-pitched slider and the passing record. Such "exhaust" can readily tip a slider ABS to one side (undesired roll) and upset stability. A Delta slider ABS is desensitised to such exhaust-induced roll and related instabilities. Also, the simple "cuneiform" ABS shape makes it much easier for a worker to ascertain the magnitude of such lateral forces.

Also, a "Delta ABS" is more stable under low transport velocities (e.g., flying a few u" above a $3\frac{1}{2}$" or $5\frac{1}{4}$" disk at low rpm -- cf over sputtered recording surface).

3. NIMBLE: Such a delta slider seems to have interesting compliance features that make it more forgiving of media imperfection (e.g., surface asperities), being lighter and more nimble in dodging-around such surface discontinuities (this also results from its three point pressure contact as well as its somewhat pointed nose and reduction in forward ABS area in the lateral direction (i.e., "forward attentuation" or "pointing").

--Alternative structures:

Where the Delta ABS preferably is somewhat pointed at its leading edge (cf ramp R, FIG. 11), it may merely be snub-nosed in appropriate cases (e.g., see slider II, FIG. 20). Likewise, where the back-bar/slot feature and/or the ramp are not needed, these can be eliminated (see FIG. 20 also, where Delta slider II is like slider I in FIG. 11 except for eliminating ramp and back bar/slot, and exhibiting a relatively blunt nose).

Also, where symmetry of the ABS about center axis ($A_x$ -- $A_x$ FIG. 20) is commonly desired, in some instances it may not be. For instance, one may orient the ABS sides at different angles; e.g., to nullify unequal "exhaust" or like lateral forces. Thus, FIG. 21 shows a Delta ABS like II in FIG. 20 except that one side diverges from its center axis $A_x$ -- $A_x$ at about 24° (aa°) (vs. larger side-thrust on ABS) while the other diverges at about 24° (bb°). Likewise, the size and orientation/shape of the side rails flanking cavity CV may be modified.

Also, one could adapt this delta ABS for a non-self-loading slider (cf where the cavity CV has the blocking wall on its forward section pierced or removed), though, as usual, such must be downward urged for proper loading.

--Manufacturing methods:

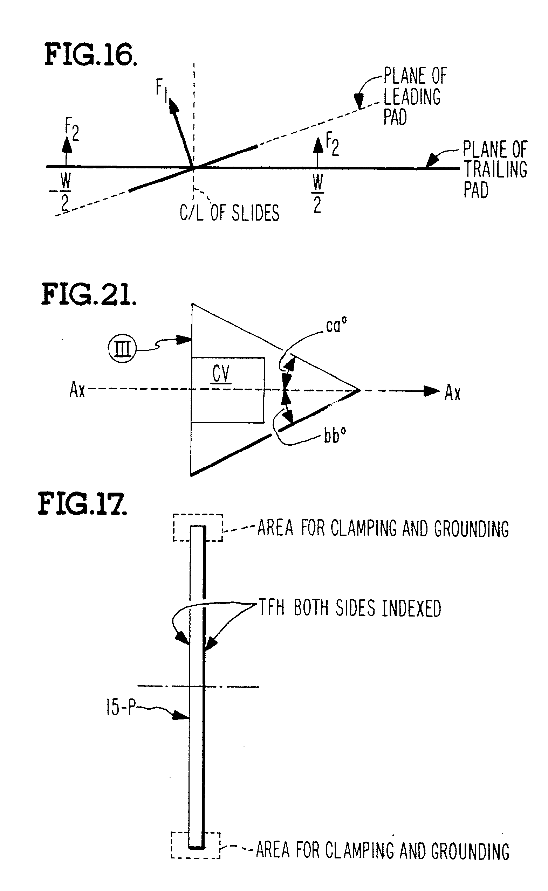

A delta slider (e.g., like slider 1-SL discussed above) presents a number of attractive manufacturing features as well. For instance, when using typical slider production techniques, one may expect about twice the yield from a given workpiece, with little or no significant increase in manufacturing time or costs. This is a very significant advantage of course as workers will acknowledge. It is somewhat schematically illustrated in FIG. 17 - 19 where a first linear array of delta sliders SL will be seen as formed by common treatment steps on a single multi-slider workpiece 15-P (see FIGS. 17-19), being first formed there and later cut-out or sliced away (diced). Where sliders SL (e.g., rectangular) might conventionally be formed from 15-P, the "delta" configuration facilitates doubling the yield approximately, to also form sliders SL', for example. That is, a second identical set of sliders SL' is likewise formed in the interstices between primary sliders SL; these second sliders SL' however are faced in the opposite direction so that their air bearing surfaces ABS are on the opposite side of this plan view.

According to known techniques, such a workpiece 15-P may be clamped at both ends, and an array of transducers for each slider set formed along the appropriate edge ( that is lower edge 15-E for sliders SL and the opposite side, and upper edge for transducers of the second slider set SL'). Work-piece 15-P may comprise a three inch (76,2 mm) thick wafer with the thin film heads deposited on these edges, and with both sides being sputtered and electroplated simultaneously, or at least at the same station, thus reducing the process time by about one-half. Both sides of the wafer would thus be masked (resist deposition and removal in common), washed, cleaned and annealed together, etc; these being performed on both sides of the wafer at the same station (and possibly simultaneously). Then the two slider sets SL, SL' could be cut away for the finished form, yielding approximately twice the number of sliders for little more than essentially the same processing time and trouble-expense.

Workers will be particularly attracted to this feature of "delta sliders", especially the possibility of forming two sets of sliders together, with associated transducers deposited on both sides of the wafer.

Automatic laser machining or ion etching may be used to conveniently define the air bearing geometry.

One may typically find that the leading ABS pad and the trailing ABS pad need not be coplanar in all instances (vs. 4-point pressure profile, as FIG. 3 which requires co-planarity) -- one other advantage of the 3-point pressure profile of a Delta slider (see also FIG. 16). "Imperfect flatness" of the leading pad may not be significant in affecting Delta slider attitude or stability -- the 3-point pressure profile is more tolerant of changes in such.

Special fixturing and transfer tooling would of course would be advisable. Also, it might not be feasible to attempt to obtain a precise alignment of the "zero-throat" line on both sides of the substrate --thus, it may be prudent to orient the masks on the "second side" of the workpiece 180 degrees from those on the front side, even where trying to maintain alignment as close as possible. Thus, it is necessary to have access to both cut surfaces on the workpiece as each surface will be machined to form ABS pads, though one need not perform these operations simultaneously. After the sliders are cut from the workpiece, each slider can be marked on a bar-by-bar basis using the negative force cavity 1-CV surface as a reference.

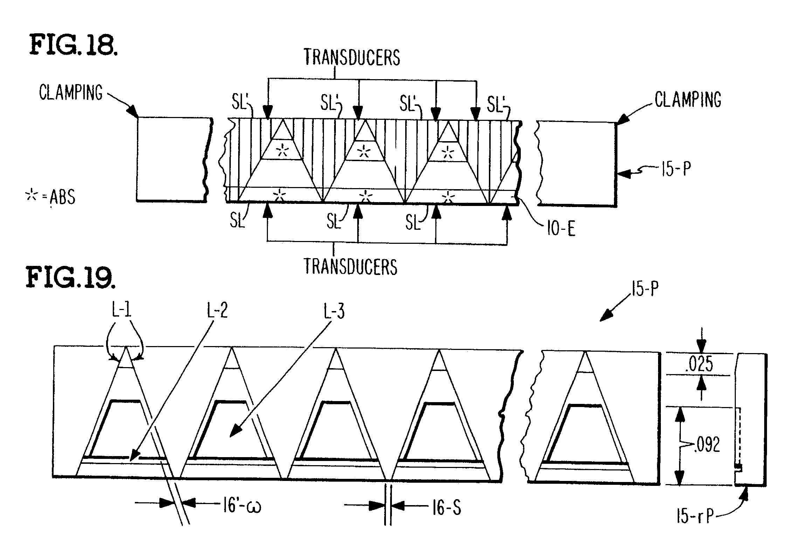

FIG. 17 shows a side view of such a workpiece 15-P as described above, clamped top and bottom, while FIG. 19 shows in bottom view somewhat greater detail of such a workpiece 15-P. For instance, with a tail-spacing 16-S of about 0,305 mm one day typically laser-etch an outline each of the sliders (cf step L-1) about 8 ± 2,54 μm. One may also laser etch the back bar channel (cf step L-2), e.g., about 0,1 mm deep. One may also laser etch the center cavity 1-CV (cf. step L-3), e.g., about 8,89 ± 1,27 μm deep.

Thus, in summary workers will appreciate that there has been described a novel "delta slider" and associated advantageous manufacturing techniques and that these involve a number of surprising features and advantages, such as those above mentioned.

For instance, such a low mass delta slider is appropriate for use on some state of the art disk drive units. The slider may in some cases even be mounted on conventional support mechanisms such as the "Watrous flexure-load beam" or like flexure-spring cantilever. Such a light slider will exhibit less momentum and be more nimble, thus more readily negotiating a nodule on a disk surface without being destabilized, etc. thereby. Reduced mass will also increase the slider's natural frequency.

The delta slider forms an advantageous "zero load" (or negative load) air bearing member and as such it may be appropriate for a wide range of implementations (e.g., 3.5 in. to 14 in. disks); varying head-disk velocities (e.g., from 12,7 to 63,5 m/sec. and even for use as a "launched" head in a disk drive unit.

And where the back bar is used it is conducive to the placement of a plurality of read/write transducers on the device.

The "three point" medium-contact feature will provide greater stability and less tendency to roll.

Dust particles and the like can be more readily negotiated and/or diverted out of the slider path by the light slider and its pointed nose. And, the pointed nose should slice through the air with less disturbance and oscillation.

Manufacturing advantages have also been mentioned such as the fact that approximately twice the number of sliders and associated thin film heads can be produced on a given wafer (both sides) with a consequent reduction in wafer cost and processing steps (e.g., heads electroplated in a single step).

Operating with the mentioned slider embodiment (cf. disk velocity of 38,3032 m/sec.; positive pressure rails 0,381 mm wide and 12,7 $\mu$m negative air-pressure cavity), an escape passage 23 as in FIGS. 4-6 and 10 × 0,1016 mm in cross section (for a flying height of 0,127 to 0,1778 $\mu$m under the back-bar) increased bearing stiffness (e.g., by about 10%), gave better control and less "roll", while reducing "pitch angle" (e.g., from 130 u-radians to 90 u-radians).

Workers will appreciate that such "Delta ABS" features are apt for use with negative pressure type sliders which fly at less than 0,254 $\mu$m (as is back bar). Workers will also appreciate that, in appropriate instances, one may alternatively use such design (e.g., and back bar/purge channel) with low flying, positive-pressure or zero-pressure (Winchester) sliders.

## Claims

1. A slider for flying a magnetic head on a fluid bearing relative to magnetic recording media (M) moving in a predetermined direction in the fluid, comprising

   a slider body having leading and trailing edges (I-TL) for flying above the moving media (M);

   a generally cuneiform planar fluid support surface extending generally transverse to the predetermined direction of movement of said media (M), the area of this surface increasing continously from a minimum at the leading edge to a maximum at the trailing edge (I-TL); and

   a cavity (I-CV; CV) formed in said fluid support surface, whereby the cavity may serve to create a controlled reduced-pressure area on the fluid bearing surface when the slider (I-SL) is flying above the moving media (M) to urge the slider (I-SL) closer to the media (M);
   characterized in that
   said slider body, in its bottom view, is delta shaped and comprises said generally cuneiform planar fluid support surface as a wedge-shaped fluid bearing surface; and
   said cavity (I-CV; CV) is spaced from said leading edge and being positioned adjacent said slider trailing edge (I-TL) and has an opening at its trailing end, whereby fluid within the cavity (I-CV) may be exhausted through said opening.

2. The slider as recited in claim 1, wherein at least a portion of said slider leading edge defines a ramp (I-R) angled away from the plane of said fluid support surface and said media (M).

3. The slider as recited in claim 1 or 2, wherein one or several transducer elements are mounted on, or adjacent to, the trailing edge (I-TL).

4. The slider as recited in any one of claims 1 to 3,
   characterized in that side rails (I-RL) are disposed along the side edges of said fluid support surface and that said cavity (I-CV) is disposed between said side rails (I-RL).

5. The slider as recited in claim 4,
   characterized in that said cavity (I-CV) is closed on three sides by said side rails (I-RL) and a cross-rail.

6. The slider as recited in anyone of claims 1 to 5, wherein the cavity is terminated by back bar means (I-BB) disposed across the trailing face of the slider (I-SL), this back bar means (I-BB) including purge channel means (I-CT) in fluid communication between the cavity (I-CV) and the ambient atmosphere whereby to better purge the cavity (I-CV) of gas and associated contaminants, a plurality of transducer means being mounted along the back bar means (I-BB).

7. The slider as recited in claim 6, wherein the back bar means (I-BB) includes a bar member extending fully across the cavity exit zone and across the slider width normal to flying direction and wherein the purge channel means (I-CT) comprises a prescribed shallow groove between said bar member (I-BB) and the exit zone of the cavity (I-CV), this groove communicating with the sides of the slider (I-SL) and extending relatively transverse said flying direction.

8. The slider of claim 6 or 7, wherein said channel means (I-CT) defines a fluid release bypass aperture adjacent the trailing edge (I-TL) of the body, and having a diameter selected to purge essentially all the fluid from said wedge shaped chamber to control the thickness of the fluid bearing formed between the body and moving media (M) and the flying height of the slider (I-SL) relative to the moving medium (M).

9. The slider as recited in anyone of claims 6 to 8, wherein a back-bar slot (I-CT) is provided adjacent said trailing edge (I-TL).

10. A method of fabricating delta shaped sliders as recited in any of claims 1 - 9, the method including:

providing a rectangular bar of slider material, this bar including a pair of elongate planar parallel top and bottom faces defined between opposing parallel sides;

forming a row of identical relatively adjacent triangular slider pieces, including forming air bearing surfaces and associated cavities and other elements in common, the sliders being disposed in alternating reversed juxtaposition along the row; and

servering the sliders so formed from the bar.

11. The method as recited in claim 10, wherein identical arrays of thin film transducers are formed in common, along each slider base before severing.

12. The method as recited in claim 10 or 11, wherein the sliders are defined and their elements so formed in common so as to be juxtaposed in alternating face-up/bottom-up relation, wherein an adjacent slider is up-ended and also face reversed, whereby every even number slider air bearing surface faces up on one bar face while every odd number slider air bearing surface faces up on the opposite bar face.

13. The method as recited in claim 12, wherein the air bearing surface cavities and convergent sides of each slider are definded by laser means.

## Revendications

1. Elément flottant destiné à faire flotter une tête magnétique sur un palier fluide par rapport à un support d'enregistrement magnétique (M) se déplaçant dans une direction prédéterminée dans le fluide, comportant

un corps d'élément flottant ayant des bords d'attaque et de fuite (I-TL) afin de flotter au-dessus du support en mouvement (M);

une surface de support par fluide plane généralement cunéiforme s'étendant d'une manière générale transversalement à la direction prédéterminée de déplacement du dit support (M), l'aire de cette surface augmentant de façon continue en partant d'un minimum au niveau du bord d'attaque jusqu'à un maximum au niveau du bord de fuite (I-TL); et

une cavité (I-CV; CV) formée dans la dite surface de support par fluide, la cavité pouvant servir à créer une zone de pression réduite commandée sur la surface de palier fluide lorsque l'élément flottant (I-SL) flotte au-dessus du support en mouvement (M) de façon à pousser l'élément flottant (I-SL) plus près du support (M);

caractérisé en ce que

le dit corps d'élément flottant, dans sa vue de dessous, a une forme en delta et comporte la dite surface de support par fluide plane généralement cunéiforme comme surface de palier fluide en forme de coin; et

la dite cavité (I-CV; CV) est espacée du dit bord d'attaque et positionnée de façon adjacente au dit bord de fuite d'élément flottant (I-TL) et possède une ouverture au niveau de son bord de fuite, le fluide dans la cavité (I-CV) pouvant être évacué par l'intermédiaire de la dite ouverture.

2. Elément flottant selon la revendication 1, dans lequel au moins une partie du dit bord d'attaque de l'élément flottant définit une rampe (I-R) inclinée à l'écart du plan de la dite surface de support par fluide et du dit support (M).

3. Elément flottant selon la revendication 1 ou 2, dans lequel un ou plusieurs éléments transducteurs sont montés sur, ou adjacents au, bord d'attaque (I-TL).

4. Elément flottant selon l'une quelconque des revendications 1 à 3, caractérisé en ce que des rails latéraux (I-RL) sont disposés le long des bords latéraux de la dite surface de support par fluide et en ce que la dite cavité (I-CV) est disposée entre les dits rails latéraux (I-RL).

5. Elément flottant selon la revendication 4, caractérisé en ce que la dite cavité (I-CV) est fermée sur trois côtés par les dits rails latéraux (I-RL) et un rail transversal.

6. Elément flottant selon l'une quelconque des revendications 1 à 5, dans lequel la cavité se termine par des moyens de barre arrière (I-BB) disposés en travers de la face de fuite de l'élément flottant (I-SL), ces moyens de barre arrière (I-BB) comprenant des moyens de canal de purge (I-CT) en communication fluidique entre la cavité (I-CV) et l'atmosphère ambiante afin de mieux purger la cavité (I-CV) des gaz et contaminants associés, plusieurs moyens transducteurs étant montés le long des moyens de barre arrière (I-BB).

7. Elément flottant selon la revendication 6, dans lequel les moyens de barre arrière (I-BB) comportent un élément de barre s'étendant complètement en travers de la zone de sortie de cavité et en travers de la largeur de l'élément flottant perpendiculaire à la direction de flottement et dans lequel les moyens de purge de canal (I-CT) comportent une rainure peu profonde prescrite entre le dit élément de barre (I-BB) et la zone de sortie de la cavité (I-SL), cette rainure communiquant avec les côtés de l'élément flottant (I-SL) et s'étendant relativement transversalement à la dite direction de flottement.

8. Elément flottant selon la revendication 6 ou 7, dans lequel les dits moyens de canal (I-CT) définissent une ouverture de dérivation de libération de fluide adjacente au bord de fuite (I-TL) du corps, et ayant un diamètre sélectionné afin de purger essentiellement tout le fluide de la dite chambre en forme de coin de façon à commander l'épaisseur du palier fluide formé entre le corps et le support en mouvement (M) et la hauteur de flottement de l'élément flottant (I-SL) par rapport au support en mouvement (M).

9. Elément flottant selon l'une quelconque des revendications 6 à 8, dans lequel une fente de barre arrière (I-CT) est prévue de façon adjacente au dit bord de fuite (I-TL).

10. Procédé de fabrication d'éléments flottants de forme en delta selon l'une quelconque des revendications 1 à 9, le procédé comprenant :

le fait de prévoir une barre rectangulaire de matériau d'élément flottant, cette barre comprenant une paire de faces supérieure et inférieure parallèles planes allongées définies entre des côtés parallèles opposés;

le fait de former une rangée de pièces d'élément flottant triangulaires adjacentes et identiques, ainsi que le fait de former des surfaces de palier à air et des cavités associées et autres éléments en commun, les éléments flottants étant disposés en juxtaposition alternativement inversée le long de la rangée; et

le fait de séparer les éléments flottants ainsi formés de la barre.

11. Procédé selon la revendication 10, dans lequel des rangées identiques de transducteurs à film mince sont formés en commun, le long de chaque base d'élément flottant avant séparation.

12. Procédé selon la revendication 10 ou 11, dans lequel les éléments flottants sont définis et leurs éléments ainsi formés en commun de façon à être juxtaposés en relation alternée face en haut/fond en haut, un élément flottant adjacent étant l'extrémité vers le haut et également la face inversée, chaque surface de palier à air d'élément flottant de numéro pair faisant face vers le haut sur une face de barre alors que chaque surface de palier à air d'élément flottant de numéro impair fait face vers le haut sur la face de barre opposée.

13. Procédé selon la revendication 12, dans lequel les cavités de surface de palier à air et les côtés convergents de chaque élément flottant sont définis par des moyens à laser.

**Patentansprüche**

1. Gleitstück, damit ein Magnetkopf auf einem Fluidlager bezüglich sich in einer bestimmten Richtung im Fluid bewegender magnetischer Aufzeichnungsmedia (M) fliegen kann, mit
einem Gleitstückkörper mit vorlaufenden und nachlaufenden Rändern (I-TL), um über die sich bewegenden Media (M) zu fliegen;
einer im allgemeinen keilförmigen, ebenen Fluidstützfläche, die sich im allgemeinen quer zur bestimmten Bewegungsrichtung der Media (M) erstreckt, wobei die Fläche dieser Oberfläche kontinuierlich von einem Minimum am vorlaufenden Rand auf ein Maximum am nachlaufenden Rand (I-TL) ansteigt; und
einer Aushöhlung (I-CV; CV), die in der Fluidstützfläche ausgebildet ist, wodurch die Aushöhlung dazu dienen kann, einen kontrollierten Bereich von reduziertem Druck auf der Fluidlagerfläche zu erzeugen, wenn das Gleitstück (I-SL) über die sich bewegende Media (M) fliegt, um das Gleitstück (I-SL) dichter an die Media (M) zu drücken;

dadurch gekennzeichnet, daß

das Gleitstück, von seiner Unterseite aus betrachtet, deltaförmig ist und die im allgemeinen keilförmige, ebene Fluidstützfläche als keilförmige Fluidlagerfläche aufweist; und

die Aushöhlung (I-CV; CV) in einem Abstand von dem vorlaufenden Rand und benachbart zum nachlaufenden Rand (I-TL) angeordnet ist und eine Öffnung in ihrem nachlaufenden Ende hat, wodurch Fluid innerhalb der Aushöhlung (I-CV) durch die Öffnung ausgeblasen werden kann.

2. Gleitstück nach Anspruch 1,
bei welchem mindestens ein Abschnitt des vorlaufenden Randes eine Rampe (I-R) bildet, welche von der Ebene der Fluidstützfläche und der Media (M) weg geneigt ist.

3. Gleitstück nach Anspruch 1 oder 2,
bei welchem ein oder mehrere Wandlerelemente auf oder benachbart zu dem nachlaufenden Rand (I-TL) befestigt sind.

4. Gleitstück nach einem der Ansprüche 1 bis 3,
dadurch gekennzeichnet, daß seitliche Schienen (I-RL) entlang den Seitenrändern der Fluidstützfläche angeordnet sind und daß die Aushöhlung (I-CV) zwischen diesen seitlichen Schienen (I-RL) angeordnet ist.

5. Gleitstück nach Anspruch 4,
dadurch gekennzeichnet, daß die Aushöhlung (I-CV) an drei Seiten durch die seitlichen Schienen (I-RL) und eine Querschiene geschlossen ist.

6. Gleitstück nach einem der Ansprüche 1 bis 5,
wobei die Aushöhlung durch ein über die rücklaufende Fläche des Gleitstückes (I-SL) quer angeordnetes, rückwärtiges Balkenmittel (I-BB) begrenzt wird, wobei dieses rückwärtige Balkenmittel (I-BB) Reinigungskanalmittel (I-CT) enthält, die sich in Fluidverbindung zwischen der Aushöhlung (I-CV) und der Umgebungsatmosphäre befinden, wodurch die Aushöhlung (I-CV) von Gas und zugehörigen Verunreinigungen leichter gereinigt werden kann, wobei mehrere Wandlermittel entlang des rückwärtigen Balkenmittels (I-BB) befestigt sind.

7. Gleitstück nach Anspruch 6,
bei welchem das rückwärtige Balkenmittel (I-BB) ein Balkenelement aufweist, das sich vollständig quer über die Auslaßzone der Aushöhlung und über die Breite des Gleitstückes rechtwinklig zur Flugrichtung erstreckt, und bei welchem das Reinigungskanalmittel (I-CT) eine bestimmte flache Nut zwischen dem Balkenelement (I-BB) und der Auslaßzone der Aushöhlung (I-CV) aufweist, wobei diese Nut mit den Seiten des Gleitstückes (I-SL) in Verbindung steht und sich quer zur Flugrichtung erstreckt.

8. Gleitstück nach Anspruch 6 oder 7,
bei welchem das Kanalmittel (I-CT) eine Fluidabgabebypassöffnung bildet, die benachbart zum nachlaufenden Rand (I-TL) des Körpers angeordnet ist und einen Durchmesser hat, der so gewählt ist, daß im wesentlichen das gesamte Fluid aus der keilförmigen Kammer abgegeben werden kann, um die Dicke des zwischen dem Körper und den sich bewegenden Media (M) gebildeten Fluidlagers und die Flughöhe des Gleitstückes (I-SL) bezüglich des sich bewegenden Mediums (M) zu steuern.

9. Gleitstück nach einem der Ansprüche 6 bis 8,
bei welchem ein Schlitz (I-CT) im rückwärtigen Balken benachbart zum nachlaufenden Rand (I-TL) vorgesehen ist.

10. Verfahren zur Herstellung von deltaförmigen Gleitstücken nach einem der Ansprüche 1 bis 9,
wobei das Verfahren die Schritte aufweist:
einen rechtwinkligen Stab aus Gleitstückmaterial vorzusehen, wobei dieser Stab zwei längliche, ebene, parallele Ober- und Unterseiten aufweist, die zwischen gegenüberliegenden parallelen Seiten gebildet sind;
eine Reihe von identischen, benachbart zueinander angeordneten, dreieckigen Gleitstücken und Luftlagerflächen und zugehörige Aushöhlungen und andere Elemente gemeinsam zu bilden, wobei die Gleitstücke alternierend in zueinander entgegengesetzter Richtung nebeneinander in der Reihe angeordnet sind; und
die so ausgebildeten Gleitstücke aus dem Stab herauszuschneiden.

11. Verfahren nach Anspruch 10,
bei welchem identische Felder von Dünnfilmwandlern entlang jeder Gleitstückunterseite vor dem Abschneiden gemeinsam ausgebildet werden.

12. Verfahren nach Anspruch 10 oder 11,
bei welchem die Gleitstücke so gebildet und ihre Elemente gemeinsam so ausgebildet werden, daß sie in alternierender Anordnung mit oben liegender Oberseite und oben liegender Unterseite nebeneinander angeordnet sind, wobei ein benachbartes Gleitstück mit seinen Enden und Oberflächen umgekehrt angeordnet ist, wodurch sich die Luftlagerfläche jedes geradzahligen Gleitstückes an der einen Stabfläche befindet, während sich die Luftlagerfläche jedes ungradzahligen Gleitstückes an der entgegengesetzten Stabfläche befindet.

13. Verfahren nach Anspruch 12, bei welchem die Aushöhlungen in der Luftlagerfläche und die konvergierenden Seiten jedes Gleitstückes durch eine Lasereinrichtung ausgebildet werden.

# FIG.1. Prior Art

# FIG.2.

## FIG.3.

142
134
144
136

## FIG.9.

500 μ" NEG. PRESSURE RECESS ( 20-c)

20

AIR PURGE PASSAGE 23

DISK
20-f
21
M'

## FIG.10. SELFLOAD SLIDER.

30

SELFLOAD SLIDER, LESS
AIR ESCAPE

31

(30-c)

DISK
30-f
M'

31-Tc

AREA DEBRIS CAN CUT OFF
NEG. PRESSURE CHANNEL

# FIG.4.

POSITIVE PRESSURE REGION

NEGATIVE PRESSURE REGION

AXIS A

20-C

AXIS B

# FIG.7.

AXIS A

P/Pa

# FIG.8.

AXIS B

P/Pa

**FIG.5.**

**FIG.6.**

## FIG.11.

TL  ABS  56  POSITIVE FORCES

SL

I

TFH AREA

RAMP R

PD

NEG. FORCE CAVITY CV

CV  56  R

M

## FIG.20.

II

$A_x$  CV  $A_x$

## FIG.12A.

I-R  I-N

I-SL  I-PD

I-RL  I-RL

I-CV

I-CT

I-BB  FIS  I-TL

## FIG.12B.

I-R  I-N

I-SL

I-CV

I-CT

j

.0

# FIG.13A.

I-BB

I-N  I-R  I-PD

I-CV

I-T'L

aa'

# FIG.13B.

I-TL  R/W HEADS

# FIG.14A.

PRESSURE PROFILES
FOR
SLIDER AIR BEARING

PRESSURE
FRONT PAD

REAR
PAD

Pk

P k'

$-\frac{W}{2}$

$\frac{W}{2}$ x

CAVITY

# FIG.14B.

$W/2$  $0$  $W/2$

x

I-BB

I-CT

I-cv

I-rL

I-SL

$I-P_d$

# FIG.15.

12F

12T

# FIG.16.

F₁

F₂

PLANE OF
LEADING
PAD

PLANE OF
TRAILING
PAD

$-\dfrac{W}{2}$

$\dfrac{W}{2}$

F₂

C/L OF SLIDES

# FIG.21.

Ⅲ

ca°

CV

Ax

Ax

bb°

# FIG.17.

AREA FOR CLAMPING AND GROUNDING

TFH BOTH SIDES INDEXED

15-P

AREA FOR CLAMPING AND GROUNDING

EP 0 238 727 B1

**FIG.18.**

TRANSDUCERS

CLAMPING

SL'    SL'    SL'    SL'

CLAMPING

✲ = ABS

15-P

SL    SL    SL

10-E

TRANSDUCERS

**FIG.19.**

15-P

L-1    L-2    L-3

.025

.092

16'-ω    16-S

15-rP